(19) Europäisches Patentamt
European Patent Office
Office européen des brevets

(11) Veröffentlichungsnummer: **0 054 694**
**B1**

(12) # EUROPÄISCHE PATENTSCHRIFT

(45) Veröffentlichungstag der Patentschrift: **28.05.86**

(51) Int. Cl.$^4$: **B 41 J 3/04**

(21) Anmeldenummer: **81108977.0**

(22) Anmeldetag: **27.10.81**

(54) **Für einen Tintenstrahldrucker mit einem entlang der Druckzeile hin und her bewegbaren Druckwagen bestimmter Druckkopf.**

(30) Priorität: **19.12.80 US 218145**

(43) Veröffentlichungstag der Anmeldung:
**30.06.82 Patentblatt 82/26**

(45) Bekanntmachung des Hinweises auf die Patenterteilung:
**28.05.86 Patentblatt 86/22**

(84) Benannte Vertragsstaaten:
**DE FR GB IT**

(56) Entgegenhaltungen:
**DE-A-2 725 761**
**DE-A-3 018 334**
**US-A-3 787 880**
**US-A-3 823 409**
**US-A-4 032 928**
**US-A-4 126 868**
**US-A-4 183 031**

(73) Patentinhaber: **International Business Machines Corporation**
**Old Orchard Road**
**Armonk, N.Y. 10504 (US)**

(72) Erfinder: **Smith, Normand Coy**
**820 Stanton Road**
**Endicott New York 13760 (US)**

(74) Vertreter: **Kirchhof, Norbert, Ing. grad.**
**Schönaicher Strasse 220**
**D-7030 Böblingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 054 694 B1

**Beschreibung**

Die Erfindung bezieht sich auf einen für einen Tintenstrahldrucker mit einem entlang der Druckzeile hin und her bewegbaren Druckwagen bestimmten Druckkopf, dessen Tintenvorratsbehälter über Filter mit mindestens einer piezoelektrischen betreibbaren Pumpenkammer in Verbindung steht.

Tintenstrahldrucker, die nur dann Tröpfchen erzeugen, wenn dieselben für die Aufzeichnung erforderlich sind (drop-on-demand Prinzip), weisen gewöhnlich einen Druckkopf auf, der eine Mehrzahl von Düsen besitzt und entlang einer Druckzeile des zu bedruckenden Papieres sich bewegt und mit einem wiederauffüllbaren Tintenreservoir ausgerüstet ist. Ein derartiger Drucker ist in der US-Patentschrift 4 095 237 beschrieben. Bei diesem Drucker sind am hin-und herbewegbaren Druckwagen sowohl der Druckkopf als auch das Tintenreservoir befestigt.

Das Wiederauffüllen von Tinte ist häufig unbequem. Es muß darauf geachtet werden, daß keine Luft in die Zuführleitungen zu den Düsen gelangt, wodurch die letzteren unwirksam werden würden und es muß ein Überlaufen bzw. Austreten der Tinte sorgfältig vermieden werden. Die Auffüllbehälter für die Tinte sind des öfteren komplexer Natur, derart, daß sie einen Tintenlöscher und eine durchstoßbare Öffnung aufweisen, durch welche die Tinte dem Druckkopf zuführbar ist. Gewöhnlich erfordert ein drop-on-demand-Drukker auch gelegentliches Reinigen, welches das Entfernen des Düsen-und Pumpenaufbaues oder den Einsatz einer Reinigungsflüssigkeit für die Tinte erfordert. Die Düse kann auch so verschmutzt werden, daß sie ausgetauscht werden muß. Dies erfordert einen Austausch des gesamten Druckkopfes.

Bei den bekannten Aufzeichnungsgeräten ist es nicht möglich, die Düsengröße zu verändern und somit die Tropfengröße der Markierflüssigkeit. Es ist häufig erwünscht, die Druckqualität zu verändern durch Veränderung der Druckpunktanzahl pro Längeneinheit oder der Druckelementdichte. Eine weitere Begrenzung stellt die Farbe dar. Wenn eine oder mehrere zusätzlichen Farben zu verwenden sind, sind gewöhnlich der Düsenaufbau und die Tintenzuführmittel für die besondere Farbe zu verdoppeln. Dadurch wird die Markiervorrichtung wesentlich komplexer und aufwendiger.

Die Erfindung, wie sie in den Ansprüchen gekennzeichnet ist, löst die Aufgabe, einen leicht auswechselbaren Druckkopf zu schaffen, der mindestens einen Tropfengenerator mit Filter und Tintenvorratsbehälter enthält, der nach dem Verbrauch der Tinte als geschlossene Baueinheit austauschbar ist, also ein Einwegdruckkopf ist.

Die bei der Erfindung als Tintenvorratsbehälter verwendete Blase ist durch die Patentschrift US—A—4 183 031 bekannt. Bei dem Drucker nach dieser Patentschrift ist die Blase jedoch nicht am Druckwagen befestigt.

Die durch die Erfindung erreichten Vorteile sind im wesentlichen darin zu sehen, daß die Entfernung vom Tintenvorrat zur Düse so kurz wie möglich bemessen ist und daß jegliche Leitung von einer stationären Tintenvorratsstelle zu dem hin und her sich bewegenden, den Druckkopf tragenden Wagen, vermieden wird. Außerdem sind die mit Tinte gefüllten Druckköpfe leicht zu transportieren und die Herstellungsqualität kann gründlich beim Zusammenbau kontrolliert werden. Der Druckkopf ist leicht anpaßbar, um eine Vielzahl von Tropfengeneratoren und Tintenvorratsbehälter aufnehmen zu können, von denen ein jeder Tinte unterschiedlicher Farbe enthält.

Im folgenden wird die Erfindung anhand von verschiedene Ausführungswege darstellenden Zeichnungen näher erläutert.

Es zeigen:

Fig. 1 einen drop-on-demand Tintenstrahldrucker in schaubildlicher Darstellung,

Fig. 2 einen Schnitt durch den Druckkopf nach Fig. 1,

Fig. 3 einen Schnitt einer anderen Ausführungsform eines Druckkopfes und

Fig. 4 den Druckkopf und seine Aufnahmevorrichtung nach Fig. 1 in schaubildlicher Darstellung.

Der Tintenstrahldrucker 10 (Fig. 1) weist den hin und her bewegbaren Druckkopfwagen 11 auf, der den Einwegdruckkopf 12 aufnimmt. Der Rahmen des Tintenstrahldruckers besteht aus einem Paar Platinen 13, 14, die durch ein Paar Stangen 15 voneinander beabstandet gehalten werden. Der Druckkopfwagen 11 wird mittels der durch die Öffnung 17 hindurchragenden Führungsstange 16 geführt und steht mit seiner Mutter 19 in Verbindung mit der Gewindespindel 18. Die Stange 20 dient zur Abstützung und Führung des Druckkopfwagens 11 an seinem anderen Ende.

An der Platine 13 ist der gestrichelt dargestellte Motor 21 teilweise im Zylinder 22 eingekapselt, in dessen Wandung Öffnungen 23 sich befinden. Diese Öffnungen sind zwischen ringförmigen Wülsten angeordnet, auf denen das zu beschriftende Papier aufliegt. Der Zylinder 22 ist mit seinen radialen Scheiben 24 mit der Ausgangswelle 25 des Motors verbunden. Das rechte Ende dieser Welle ist in einem in der Platine 14 angeordneten und nicht gezeigten Lager gelagert. Ein Teil der Platine 14 ist in Ausrichtung mit dem Ende des Zylinders 22 ausgeschnitten, um eine, mit dem Zylinderinnenraum in Verbindung stehende Öffnung vorzusehen. An der Außenseite der Platine 14 ist ein Gebläse mit dem Motor 26 befestigt, das zum Evakuieren des Zylinderinnenraumes dient, wodurch das zu bedruckende Papier 27 an die Zylinderaußenfläche gezogen wird. Das konische Schild 28, das sich zwischen der Ausgangswelle 25 und der Innenfläche des Zylinders erstreckt, verhütet einen Lufteintritt vom linken Ende des Zylinders. Da der Zylinder 22 von mehreren perforierten radialen Scheiben 24 getragen wird, die mit der Ausgangswelle 25 des Motors 21 verbunden sind, dreht sich bei laufendem Motor dem Zylinder und wird das zu bedrukkende Papier 27 vor dem Druckkopfwagen 11 und dem Einwegdruckkopf 12 transportiert. Das andere Ende der Ausgangswelle 25 trägt die Rollen 30, 31, die über den Riemen 34 mit den entsprechenden Rollen 32, 33 (letzte nicht gezeigt) zusammenwirken, um die Gewindespindel 18 anzutreiben. Die Zeitgeberscheibe 35, mit abwechselnd reflektierenden und transparenten Bereichen, wird durch den Übertrager 36 abgefühlt, um eine Serie von Ausgangsimpulen zu erzeugen, die als Zeitgebersignale für den Betrieb des Tropfengenerators im Einwegdruckkopf 12 dienen, wie weiter unten beschrieben ist. Wenn der Motor 21 rotiert, rotiert ebenfalls die Gewindespindel 18. Da letztere in Wirkungsverbindung mit der Mutter 19 steht, überstreicht der Druckkopfwagen 11 das sich weiterbewegende, zu bedruckende Papier 27 mit einer Geschwindigkeit, die bestimmt ist durch die Steigung der Gewindespindel 18 und das Übersetzungsverhältnis der Rollen 30, 32. Der Hebel 39 ist unterhalb des Druckkopfwagens 11 angeordnet, um die als öffenbares Mutterschloß wirkende Mutter 19 außer Eingriff mit der Gewindespindel 18 zu bringen und um dem Druckkopfwagen 11 eine freie Bewegung entlang der Führungsstangen 16, 20 zu erlauben. Zum, Zwecke des Auflegens eines neuen zu bedruckenden Blattes auf den Zylinder 22 ist die Platte 40 mit den Kantenführungen 41 vorgesehen. Das Papier ist entfernbar durch Stoppen des Motors 21 oder mittels des Luftloches 42 an der Vakuumpumpe 26, das zur Minderung des Unterdruckes im Innern des Zylinders dient. Die Rollenpaare 30, 32 und 31, 33 ergeben unterschiedliche Übersetzungsverhältnisse, um die Druckdichte auf dem Papier durch Veränderung der Geschwindigkeit, mit welcher der Druckkopfwagen 11 das auf dem Zylinder befindliche Papier überquert, zu ändern. Kontrollsignale für das Ausstoßen von Tröpfchen aus dem Einwegdruckkopf 12 werden über Leiter im Flachkabel 44 vom Zeichengenerator 45 und dem Druckzeilenpuffer 46 über die Steuerlogik 47 geliefert.

Der Einwegdruckkopf 12 ist in Fig. 2 detaillierter dargestellt und besitzt die Gehäuseteile 50 und 51, die zusammen eine einheitliche Patrone, die als Flasche wirkt, zu bilden. Das Gehäuse ist vorzugsweise aus einem Kunststoff hergestellt.

Das Gehäuseteil 50 besitzt den Hals 52 mit dem Innenflansch 53 und dem Außenflansch 54, um den Einwegdruckkopf in der Aufnahmevorrichtung 55 des Druckkopfwagens 11 in ihrer Längsrichtung bestimmt zu lagern. In der Öffnung 56 des Halses ist die Röhre 57 aus einem piezoelektrischen Material eingeführt, das bei seiner Erregung als Tropfengenerator wirkt, um Tintentröpfchen auszustoßen. Die Röhre besitzt eine innere leitende Plattierung 58, die sich kontinuierlich bis zur Hinterkante erstreckt, um eine Verbindung mit dem Band 59 auf der Außenfläche der Röhre herzustellen. Die eine Düsenöffnung 61 aufweisende Düsenplatte 60 ist am linken Ende der Röhre 57 befestigt, um eine Öffnung für das Ausstoßen der Tintentröpfchen vorzusehen. Die Außenfläche der Röhre 57 ist ebenfalls mit einem elektrisch leitenden Material 62 fast gänzlich überzogen, jedoch vom Bande 59 isoliert. Die Röhre ist im Gehäuse auf einem Paar elektrisch leitender nachgiebiger Ringe 63, 64 gelagert, die durch das nichtleitende Kunststoffrohr 65 voneinander beabstandet sind. Das Innere der Gehäuseöffnung 56 weist ein Paar elektrisch leitende Bänder 67, 68 auf, die mit entsprechenden Ringen 63, 64 verbunden sind. Die Bänder 67, 68 auf der Oberfläche der Öffnung 56 sind auch mit Leitern 69, 70 verbunden, welche die Wand des Halses 52 überbrücken und mit äußeren leitenden Ringbändern 71, 72 auf dem Hals 52 in Verbindung stehen. Diese Bänder sind in Kontakt mit ähnlichen halbkreisförmigen Bändern 73, 74 auf der Innenfläche der Aufnahmevorrichtung 55. Die halbkreisförmigen Bänder 73, 74 sind mit Leitern innerhalb des Flachkabels 44 (Fig. 1) verbunden. Signale der Leiter im Flachkabel 44 sind somit imstande, die piezoelektrische Röhre 57 wahlweise zu erregen, um ein ausreichendes Zusammenziehen zu bewirken zum Zwecke des Ausstoßens von Tintentröpfchen aus der Düsenöffnung 61 gegen das zu bedruckende Papier.

Die Tinte in dem Einwegdruckkopf 12 befindet sich in der Blase 80 im Gehäuseteil 51. Ein geeignetes Blasenmaterial für wässrige Tinte ist das gewöhnlich für Fingerüberzüge oder ähnliches, verwendete. Der Ring 82 ist in das Innere des Gehäuseteiles 51 eingepreßt, um die Blase 80 festzuhalten und das offene Ende der Blase ist über den reduzierten Durchmesser 81 des Gehäuseteiles 51 entlang seiner Außenseite zurückgezogen. Daraufhin ist das Gehäuseteil 50 mit dem Gehäuseteil 51, wie gezeigt, verbunden und trennt die Kante der Blase zwischen dem reduzierten Durchmesserteil 81 und die Außenkante 83. Ein Schmiermittel, das in der Tinte unlöslich ist, hilft beim vorgenannten Vereinigen der beiden Gehäuseteile und dichtet gleichzeitig ab. Um ein Verschmutzen der Düsenöffnung 61 zu vermeiden, wird die aus der Blase kommende Tinte im Filter 84 gereinigt, der durch den Ring 85 in seiner Lage gehalten wird. Eine Scheibe aus Filtermaterial kann eine fein perforierte Membran bilden.

Als Hilfe zum Einlegen des Einwegdruckkopfes 12 in den Druckkopfwagen 11 dient der Bolzen 86, der in das Gehäuse eingesetzt ist, um mit einer Aussparung 67 im Druckkopfwagen zusammenzuwirken. Der Einwegdruckkopf wird am hinteren Ende des Druckkopfwagens 11 durch das konkave Aufnahmelager 88 getragen, das der Aufnahmevorrichtung 55 an der Vorderseite des Druckkopfwagens 11 ähnlich ist. Um der Blase 80 ein Zusammenfallen zu erlauben, nachdem die Tinte verbraucht ist, ist das Luftloch 89 vorgesehen, das das Innere des Einwegdruckkopfes 12 mit dem Außenluftdruck verbindet. Das Ausstoßen von Tinte erzeugt einen leichten Unterdruck innerhalb der Blase, wodurch ein Zusammenfallen verursacht wird.

Da Luft im Flüssigkeitssystem die einwandfreie Wirkungsweise der Ausdrückröhre oder des Tropfenerzeugers beeinträchtigt muß beim Füllen des Einwegdruckkopfes darauf geachtet werden, daß in denselben keine Luft eingeschlossen wird. Das Füllen geschieht durch Trennen der beiden Gehäuseteile und Entfernen des Filters. Die Tinte wird dann in die Ausdrückröhre eingegeben, bei aufrechter Lage des Gehäuseteiles 50, so daß der Tintenpegel über dem Platz für das Filter sich befindet. Hierauf wird das Filter und sein Sicherungsring 85 eingesetzt, um sicherzustellen, daß keine Luft zwischen dem Filter und der Düse 61 sich befindet. Die Gehäuseteile 50, 51 werden dann mit in richtiger Lage befindlicher Blase miteinander verbunden und der Einfüllstöpsel 90 wird entfernt. Der Einwegdruckkopf wird in ungefähr horizontale Lage umgekippt, die in Fig. 2 gezeigt ist, und Tinte wird dann in die Blase eingegeben, bis sie die Stöpselöffnung erreicht, worauf der Stöpsel eingesteckt wird.

Während des Betriebes ist der Einwegdruckkopf in den Aufnahmevorrichtungen des Druckkopfwagens 11 gehalten und elektrische Signale werden über die Leiter im Flachkabel 44 zugeführt. Dies verursacht ein Zusammenziehen der Quetschröhre, wodurch sich die Erzeugung aufeinanderfolgender Tintentröpfchen ergibt, die gegen das zu bedruckende Papier ausgestoßen werden. Während der das zu bedruckende Papier 27 tragende Unterdruckzylinder rotiert, überquert der Druckkopf das Papier, um Zeichen durch aufeinanderfolgende Reihen von wahlweise erzeugten Tröpfchen zu bilden. Dieser Einwegdruckkopf ergibt eine unaufwendige, Tropfengenerator, Filter und Tintenvorrat enthaltende Einheit, die nach dem Verbrauch der Tinte weggeworfen werden kann. Dieses Konzept ermöglicht den Austausch von Düsen verschiedener Größe und Tinte verschiedener Farben und Zusammensetzungen.

Der Einwegdruckkopf ist abänderbar durch Hinzufügen von Düsen, um schnelleres Drucken oder eine unterschiedliche Druckpunktdichte zu ermöglichen. Es mag auch wünschenswert sein, zusätzliche Düsen in einem einzigen Einwegdruckkopf vorzusehen und jede Düse mit Tinte unterschiedlicher Farbe zu speisen für wahlweisen Farbdruck. Der Ausführungsweg nach Fig. 3 gestattet das Drucken mit zwei unterschiedlichen Farben. Jedoch die Düse und die Röhrenanordnung innerhalb des Halses des Einwegdruckkopfes kann mit einer einzigen Blase oder Farbe von Tinte verwendet werden, anstatt den zwei gezeigten Blasen. Die Bezugszeichen der Elemente der zweiten Düse wurden mit dem Suffix "a" versehen. Der Einwegdruckkopf 100 (Fig. 3) enthält zwei piezoelektrische Röhren 57 und 57a, die einen ähnlichen Aufbau und elastische Ringe 63, 63a, 64 und 64a aufweisen. Ein Unterschied ist jedoch darin zu sehen, daß eine Grundelektrode 70a vorgesehen ist, die mit dem ringförmigen Leiter 72 verbunden ist, so wie der Leiter 70. Jedoch erfordern individuelle Steuerschaltkreise besondere Ringe 71 und 71a und Leiter 66 und 66a. Jeder Tropfenerzeuger 56 und 56a ist mit seinem Tintenvorrat durch je einen Kanal 103 oder 104 verbunden. Jeder dieser Kanäle verbindet auch die Kammer 105, in welcher das Filter 106 durch den Sicherungsring 107 gehalten wird. Tinte wird über die Filter von den Blasen 108 geliefert, die mit der Kammer 109 verbunden sind. Jede der Blasen wird in ihrer Stellung gehalten durch Einzwängen des offenen Endes der Blase in die Aussparung 110 und anschließendes Einklemmen der Kante der Blase mit Hilfe des elastischen Ringes 111. Das Luftloch 112 gestattet ein Zusammenfallen der Blasen, nachdem die Tinte verbraucht ist. Jede Blasenkammer 108 und 109 wirkt mit einer besonderen Füllöffnung 113 zusammen, die durch Stöpsel 114 nach dem Füllen verschlossen sind. Obwohl nur zwei Blasen in dem Einwegdruckkopf 100 gezeigt sind, kann derselbe auch abgeändert werden für zusätzliche Aufnahmebehälter für unterschiedliche Farben. Zusätzlich kann eine Mehrzahl von Düsen horizontal oder in verschiedenen Ebenen angeordnet werden.

Der Einwegdruckkopf 12 und die Aufnahmevorrichtung 55 ist in Fig. 4 detaillierter dargestellt. Die Aufnahmevorrichtung 55 besitzt eine im wesentlichen halbkreisförmige Form, um mit dem Hals 52 des Einwegdruckkopfes übereinzustimmen, so daß betriebssichere elektrische Kontakte zwischen miteinander zusammenwirkenden Ringleiterbändern 71 und halbkreisförmigen Bändern 73 aufrechterhalten werden. Um einen guten Kontakt sicherzustellen, sind die Radien der Aufnahmevorrichtung und Bänder 73 geringfügig kleiner als jene der Bänder 71, wodurch sich nach dem Einlegen des Einwegdruckkopfes ein satter Sitz ergibt. Die Aufnahmevorrichtungsschenkel 55a erstrecken sich ein klein wenig über die Endpunkte einer Horizontalen durch den Mittelpunkt des Halses. Der Aufnahmevorrichtungsteil oder der gesamte Druckwagen 11 ist vorzugsweise aus einem Kunststoff, wie Nylon oder ähnlichem, gegossen, das eine gewisse Nachgiebigkeit aufweist, um beim Einsetzen des Einwegdruckkopfes gespreizt werden zu konnen. Somit konnen die vertikalen Schenkel 55a der Aufnahmevorrichtung seitlich bewegt werden, um den Hals des Einwegdruckkopfes aufnehmen zu konnen. Der Schlitz 55b kann seitlich in die Aufnahmevorrichtung eingeschnitten werden, um eine leichtere Ablenkung der Schenkel zu ermöglichen. Es sind auch vertikale Schlitze 55c vorgesehen, um separate Tragfinger für ein Ende eines jeden halbkreisförmigen Bandes 73 zu bilden. Diese Anordnung erlaubt ein individuelles Ablenken der Bänder 73 für ein Anpassen an Veränderungen der Dimensionen des Halses und der Ringbänder 71.

**Patentansprüche**

1. Druckkopf für einen Tintenstrahldrucker (10) mit einem entlang der Druckzeile hin und her bewegbaren Druckwagen (11), der sowohl den Druckkopf (12) als auch den Tintenvorratsbehälter (80) trägt, wobei der Tintenvorratsbehählter über Filter (84) mit mindestens einer piezoelektrischen betreibbaren Pumpenkammer (57) in Verbindung steht, dadurch gekennzeichnet, daß der Tintenvorratsbehälter eine luftdichte Blase (80) darstellt, die mit dem Druckkopf (12) eine unlösbare Baueinheit bildet, wobei die Außenseite der Blase dem Umgebungsluftdruck (über 89) ausgesetzt ist, daß die Elektroden (58, 62) der piezoelektrischen Pumpvorrichtung (57) mit ringförmigen Kontaktbahnen (71, 72) an der Außenfläche des Druckkopfes (12) verbunden sind, dass diese Kontaktbahnen (71, 72) mit Gegenbahnen (73, 74) einer am Druckwagen (11) vorhandenen Aufnahmevorrichtung (55) für den Druckkopf (12) in Berührung sind und daß der Druckkopf (12) eine solche Form aufweist, daß er lediglich durch Klemmwirkung in der Aufnahmevorrichtung (55) auswechselbar festhaltbar ist.

2. Druckkopf nach Anspruch 1, dadurch gekennzeichnet, daß pro Pumpenkammer (57) je eine Blase (80) vorgesehen ist.

3. Druckkopf nach Anspruch 1, gekennzeichnet durch einen zylindrischen Gehäuseteil (52) kleinen Durchmessers, an dessen Mantelfläche die Kontaktbahnen (71, 72) angeordnet sind und dessen Stirnfläche die Düsenöffnung (61) aufweist, die in der Stirnfläche einer röhrenförmigen Pumpenkammer (57) angeordnet ist, die an ihrer Innen- und Außenfläche leitende Plattierungen (58, 62) trägt, die mit den genannten Kontaktbahnen (71, 72) elektrisch verbunden sind und durch einen zylindrischen Gehäuseteil (50, 51) größeren Durchmessers, in dem der Pumpenkammer (57) zugewandt ein Filter (84) sich befindet und die Blase (80) sich gegen das gegenüberliegende Ende zu erstreckt.

4. Druckkopf nach Anspruch 3, dadurch gekennzeichnet, daß der die Blase (80) aufnehmende Teil aus zwei Zylinderhälften (50, 51) besteht, die in axialer Richtung zusammengeschoben sind und die Blase (80) mit ihrem offenen Randabschnitt durch einen Ring (82) an die Innenfläche des zylindrischen Gehäuseteiles (51) gedrückt wird und dieses Gehäuseteil (51) im Bereich des nicht eingeklemmten Teiles der Blase (80) ein Luftloch (89) aufweist.

5. Druckkopf nach Anspruch 1, dadurch gekennzeichnet, daß der zylinderförmige Druckkopf (12) an seinen beiden Enden von der Aufnahmevorrichtung (55) aufgenommen wird, deren mit dem zylindrischen Gehäuseteil (52) kleineren Durchmessers zusammenwirkende Teil eine radiale Klemmwirkung erzeugende Schenkel (55a) aufweist, die an ihren, dem Gehäuseteil (52) zugewandten Seiten die entsprechenden Gegenbahnen (73, 74) für die Kontaktbahnen (71, 72) des zylindrischen Gehäuseteiles (52) aufweisen und daß das mit dem anderen Ende zusammenwirkende Teil der Aufnahmevorrichtung (55) Zylindersegmente (88) zur axialen Ausrichtung des Druckkopfes (12) aufweist.

6. Druckkopf nach den Ansprüchen 4 und 5, dadurch gekennzeichnet, daß das Gehäuseteil (50, 51) größeren Durchmessers einen radialen Ausrichtstift (87) trägt, der zwecks radialer Ausrichtung mit einer entsprechenden Öffnung (86) in der Aufnahmevorrichtung (55), zusammenwirkt.

**Revendications**

1. Tête d'impression pour une imprimante à jet d'encre (10), comprenant un chariot d'impression (11) mobile en va-et-vient le long des lignes d'impression, qui porte aussi bien la tête d'impression (12) que le réservoir d'encre (80), le réservoir d'encre étant en communication avec au moins une chambre de pompage (57) commandée par voie piezoélectrique, à travers un filtre (84), caractérisée en ce que le réservoir d'encre est constitué par une vessie étanche à l'air (80) qui forme un sous-ensemble non démontable avec la tête d'impression (12), la face externe de la vessie étant exposée à la pression de l'air ambiant (à travers 89), en ce que les électrodes (58, 62) du dispositif de pompage piezoélectrique (57) sont connectées à des pistes de contact annulaires (71, 72) prévues sur la surface externe de la tête d'impression (12), en ce que ces pistes de contact (71, 72) sont en contact avec des contre-pistes (73, 74) appartenant à un dispositif positionneur (55) recevant la tête d'impression (12) qui est prévue sur le chariot d'impression (11) et en ce que la tête d'impression (12) présente une forme telle qu'elle soit retenue, dans le dispositif positionneur (55) par un simple effet de serrage et de manière à pouvoir être remplacée.

2. Tête d'impression selon la revendication 1, caractérisée en ce qu'il est prévu une vessie (80) pour chaque chambre de pompage (57).

3. Tête d'impression selon la revendication 1, caractérisée par une partie de corps cylindrique (52) de petit diamètre, sur la surface latérale de laquelle sont disposées les pistes de contact (71, 72) et dont la surface frontale présente l'orifice de buse (61) qui est disposé dans la surface frontale d'une chambre de pompage (57) de forme tubulaire, laquelle porte sur sa surface interne et sur sa surface externe des revêtements conducteurs (58, 62) qui sont connectés électriquement aux pistes de contact précitées (71, 72) et par une partie de boîtier cylindrique (50, 51) de plus grand diamètre, dans laquelle se trouve un filtre (84) dirigé vers la chambre de pompage (57) et dans laquelle la vessie (80) s'étend vers l'extrémité opposée.

4. Tête d'impression selon la revendication 3, caractérisée en ce que la partie qui reçoit la vessie (80) est composée de deux demi-cylindres (50, 51) qui sont assemblés par emmanchement dans la direction axiale et en ce que la vessie (80) est comprimée contre la surface interne de la partie cylindrique (51) du boîtier au niveau de son segment de bord ouvert, par une virole (82) et cette partie (51) du boîtier présente un trou de passage d'air (89) dans la région de la partie de la vessie (80) qui n'est pas serrée.

5. Tête d'impression selon la revendication 1, caractérisée en ce que la tête d'impression cylindrique (12) est positionnée à ses deux extrémités par le dispositif positionneur (55) dont la partie qui coopère avec la partie cylindrique de petit diamètre (52) du boîtier présente des branches (55*a*) qui engendrent un effet de serrage radial, lesquelles branches présentent, sur leurs faces dirigées vers la partie (52) du boîtier, des contre-pistes correspondantes (73, 74) destinées à coopérer avec les pistes de contact (71, 72) de la partie cylindrique (52) du boîtier et en que la partie du dispositif positionneur (55) qui coopère avec l'autre extrémité présente des segments de cylindre (88) servant à l'alignement axial de la tête d'impression (12).

6. Tête d'impression selon les revendications 4 et 5, caractérisée en ce que la partie de grand diamètre (50, 51) du boîtier porte un ergot d'alignement radial (87) qui coopère avec une ouverture correspondante (86) du dispositif positionneur (55) pour assurer l'alignement radial.

**Claims**

1. Print head for an ink jet printer (10) with a print carrier (11) movable back and forth along the printing line and carrying the print head (12) as well as the ink reservoir (80), said reservoir being connected via filter (84) with a least one piezoelectrically operable pump chamber (57), characterized in that the ink reservoir is an airtight bladder (80) which with the print head (12) forms a locked component, with the exterior of the bladder being exposed to the ambient air pressure (via 89), that the electrodes (58, 62) of the piezoelectric pump (57) are connected to annular contacts (71, 72) on the exterior surface of the print head (12), that these contacts (71, 72) touch corresponding paths (73, 74) of a receiving portion (55) provided on the carrier (11) for the print head (12), and that the print head (12) is of such a shape that it is exchangeably fixable merely by a clamping effect in the receiving portion.

2. Print head as claimed in claim 1, characterized in that per pump chamber (57) one respective bladder (80) is provided.

3. Print head as claimed in claim 1, characterized by a cylindrical housing part (52) with a small diameter carrying on its lateral area contacts (71, 72), and on its front surface the nozzle openings (61) arranged in the front surface of a tube-shaped pump chamber (57) which on its inner and outer surface is provided with conductive plating (58, 62) electrically connected to the above mentioned contacts (71, 72), and by a cylindric housing (50, 51) with a larger diameter where facing in the direction of the pump chamber (57) a filter (84) is provided and where the bladder (80) extends towards the opposite end.

4. Print head as claimed in claim 3, characterized in that the part holding the bladder (80) consists of two cylinder halves (50, 51) assembled in axial direction, and that the bladder (80) is pushed with its open marginal section through a ring (82) against the inner surface of the cylindrical housing (51), and that in the area of the unclamped part of the bladder (80) this housing part (51) is provided with a vent (89).

5. Print head as claimed in claim 1, characterized in that the cylindric print head (12) is received at its two ends by the receiving portion (55) whose part co-acting with the cylindric housing part (52) with the smaller diameter comprises legs (55a) which generate a radial clamping effect and comprise at their sides facing the housing part (52) the corresponding paths (73, 74) for the contacts (71, 72) of the cylindric housing part (52), and that the part of the receiving portion (55) co-acting with the other end is provided with cylinder segments (88) for the axial alignment of the print head (12).

6. Print head as claimed in claims 4 and 5, characterized in that the housing part (50, 51) with a bigger diameter carries a radial alignment pin (87) which for the radial alignment co-acts with a corresponding opening (86) in the receiving portion (55).

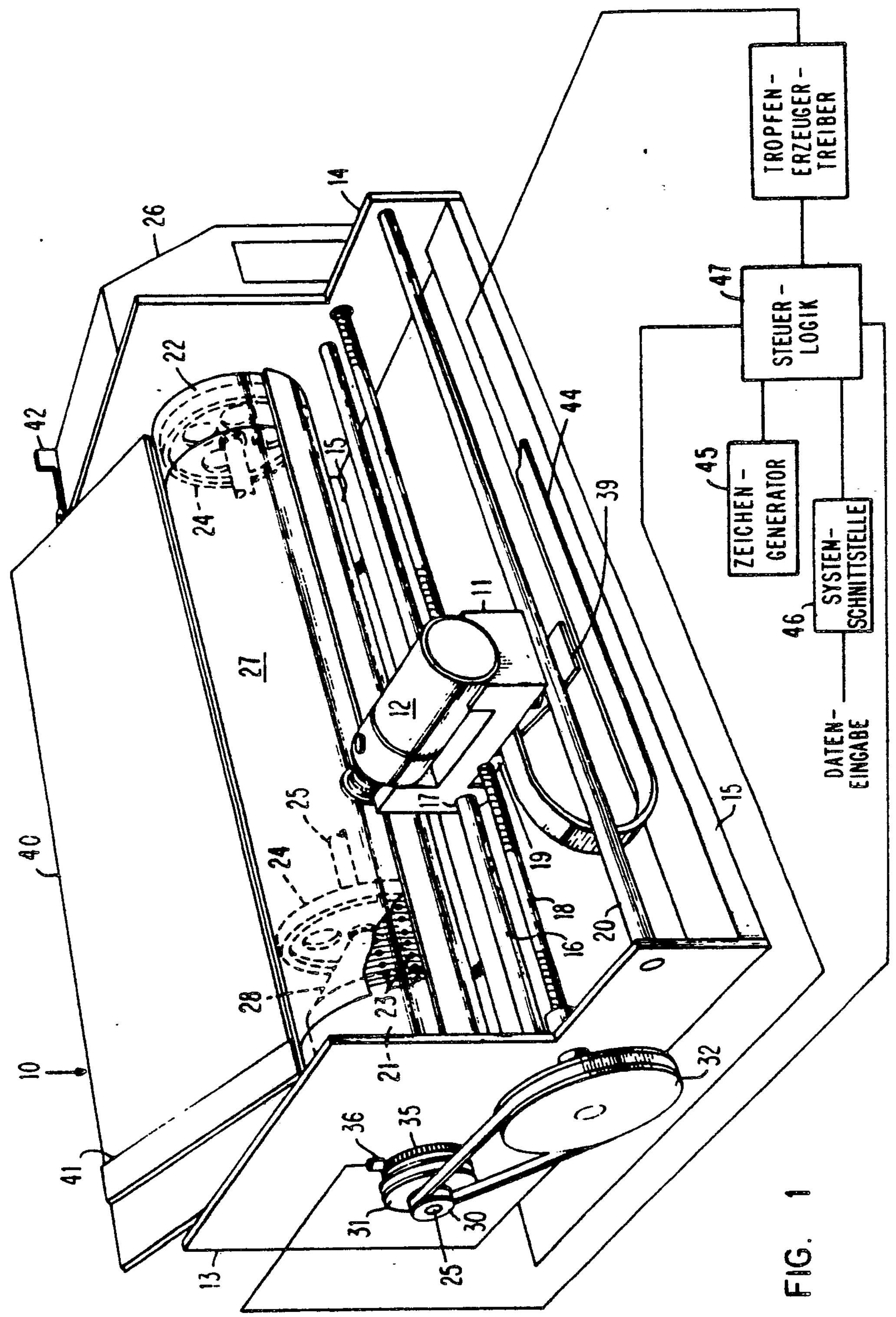
TROPFEN-
ERZEUGER-
TREIBER
STEUER-
LOGIK
ZEICHEN-
GENERATOR
SYSTEM-
SCHNITTSTELLE
DATEN-
EINGABE

FIG. 1

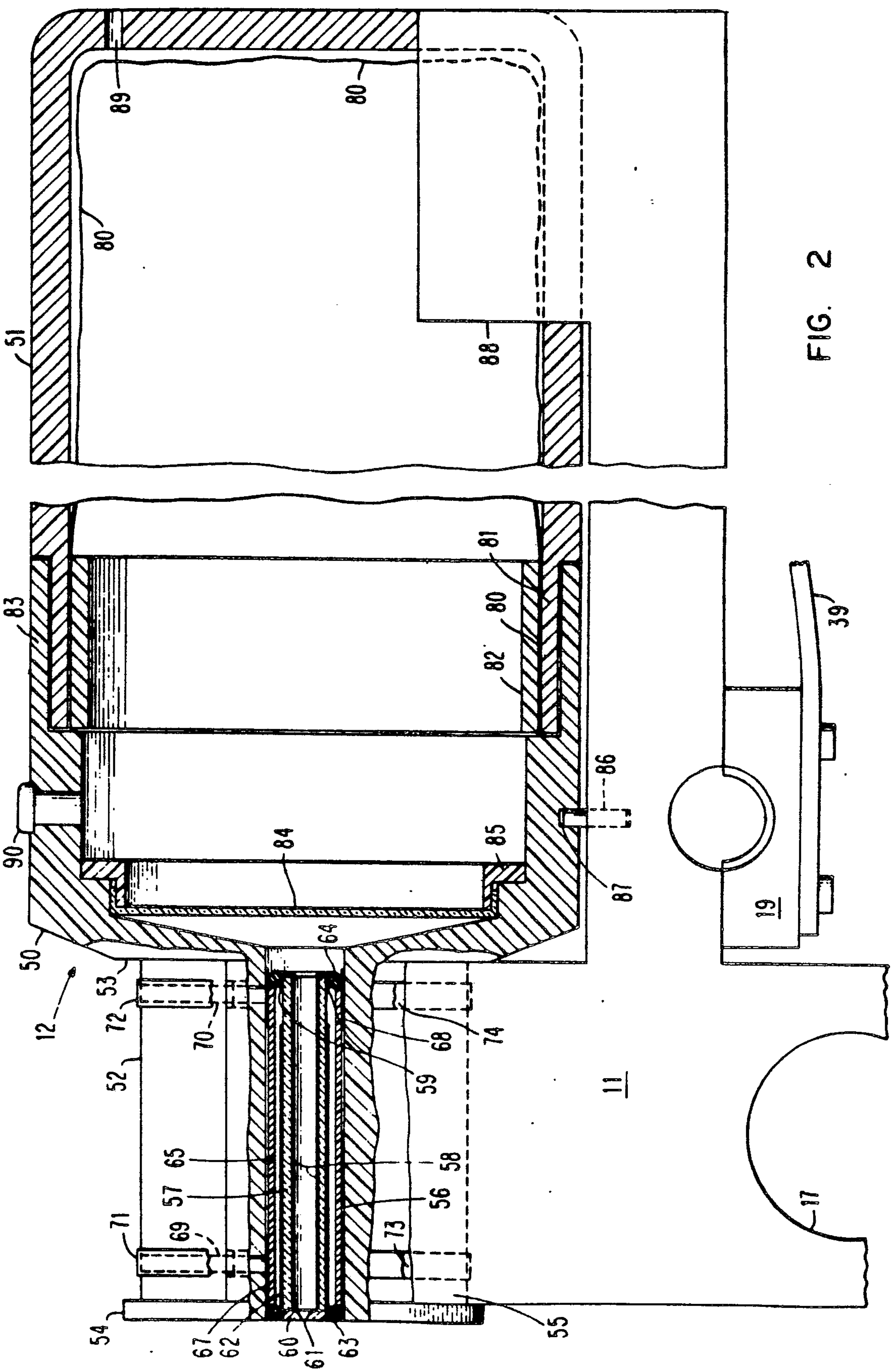

89
80
80
51
88
83
81
80
82
39
86
90
84
85
87
19
50
64
12
53
72
70
68
74
59
52
11
65
58
57
56
71
69
73
17
54
67
62
60
61
63
55


FIG. 2

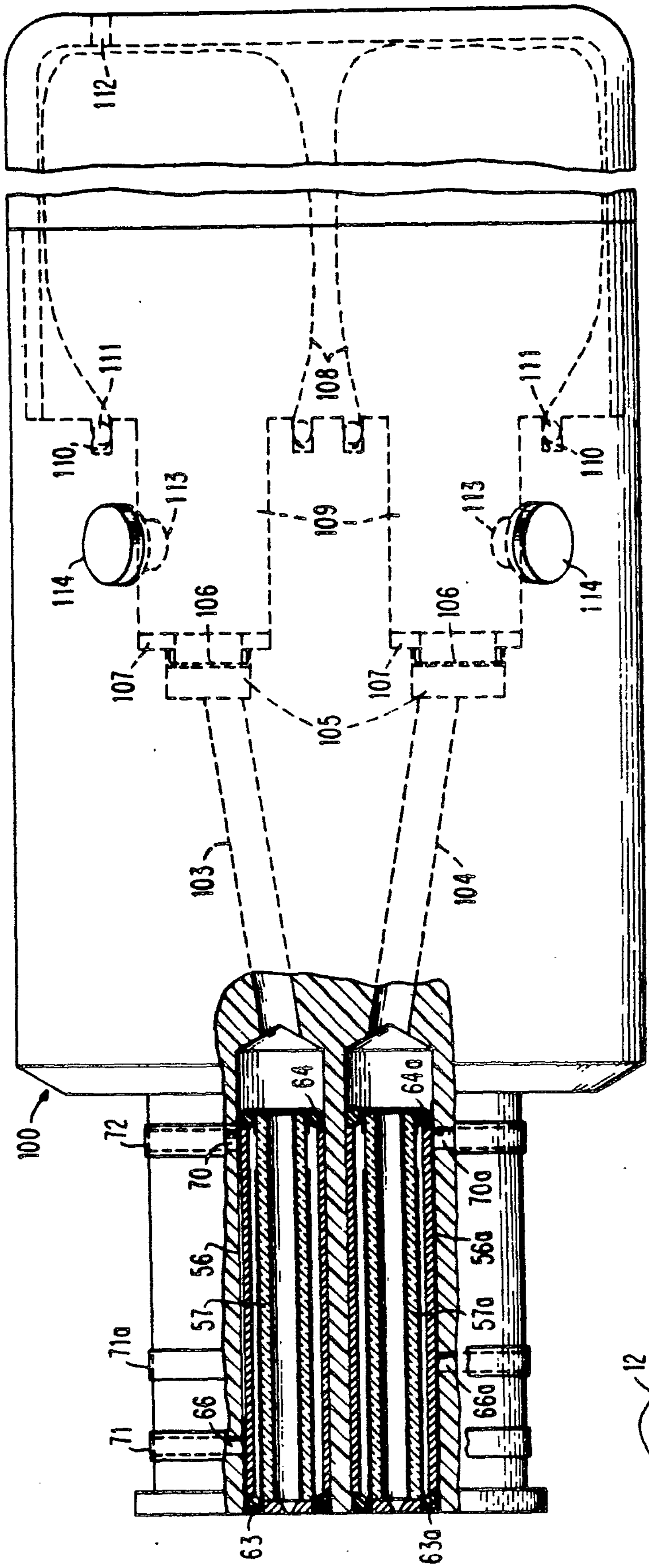

100
103
104
105
106
107
108
109
110
111
112
113
114
63
63a
64
64a
56
56a
57
57a
66
66a
70
70a
71
71a
72


FIG. 3

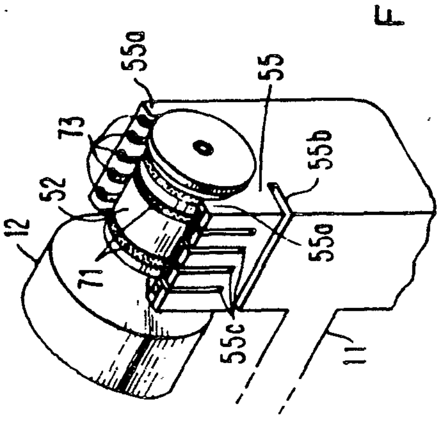

12
11
52
55
55a
55b
55c
71
73


FIG. 4